(19) **Europäisches Patentamt / European Patent Office / Office européen des brevets**

(11) **EP 2 474 608 A1**

(12) **EUROPEAN PATENT APPLICATION**
published in accordance with Art. 153(4) EPC

(43) Date of publication:
**11.07.2012  Bulletin 2012/28**

(21) Application number: **09851594.3**

(22) Date of filing: **24.11.2009**

(51) Int Cl.:
*C12N 1/20* (2006.01)　　　*A01G 7/00* (2006.01)
*C12R 1/20* (2006.01)　　　*C12R 1/38* (2006.01)
*C12R 1/40* (2006.01)

(86) International application number:
**PCT/ES2009/070526**

(87) International publication number:
**WO 2011/064414 (03.06.2011 Gazette 2011/22)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Compañía General de Canteras, S. A.**
**11011 Cádiz (ES)**

(72) Inventor: **Ramos Duque, Estrella**
**E-29720 Málaga (ES)**

(74) Representative: **Capitán García, Maria Nuria**
**ARS Privilegium, S.L.**
**Felipe IV no. 10**
**28014 Madrid (ES)**

(54) **PROCESS FOR SOIL RECUPERATION**

(57)　The present invention provides a procedure for the recuperation of degraded soils, in particular in quarries, based on isolating acid-producing microorganisms such as Pseudomonas putida, Pseudomonas brassicacearum, Flavobacterium denitrificans and Pseudomonas sp., the adhesion of such microorganisms to biological materials whereat the production of acids by the microorganisms permits the solubilisation of soil nutrients and, by means thereof, plant growth, moreover permitting the solubilisation of carbonates, giving rise to the formation of micropores which, in turn, improve the establishment and taking root of plants utilised in restoration. These properties may be found in a single microorganism or they may be combined through the establishment of microbial consortiums facilitating said activities

EP 2 474 608 A1

**Description**

**Field and background of the invention**

This invention lies within the technical field of soil recovery. In this sense, it intends to recover land that cannot be used efficiently or sustainably since they are in a degraded condition due to, for example, desertification, erosion (wind and/or water erosion), contamination (by chemical product spills, chemical saturation from abuse of agrochemical products, volcanic tailings, deposits of contaminated sludge generated in industrial processes, etc.). We also understand that in this field the term soil recovery may relate to the loss of organic matter, the loss of natural fertility, including extreme changes regarding the electrical conductivity and pH of a soil (degree of acidity or alkalinity), chronic health-related infestations and physical disorders such as negative changes in the soil profile.

In particular, this invention focuses on the recovery of soils that have been degraded due to exploitation as quarries.

Urban areas require millions of tonnes of geological materials in order to build all kinds of infrastructures and civil engineering works, buildings, pavements and to fill up depressions in the land for the benefit of the quality of life of their citizens. Mining involves the extraction of minerals and rocks in general, remove the important volumes are superficial and rock formations for use where the material extracted may be useful. These are generally materials of mineral origin, which are large and heavy and the extraction, transport and processing of which requires expensive machinery and large amounts of energy. When the quarries for sand, gravel, clay or stone are far away, transport becomes an economic limitation for the cost-effective use of these mineral resources. These materials are therefore commonly extracted from areas that are close to the building site. The use of mineral resources has affected both rural areas and suburban and peripheral areas.

One of the basic principles of the recovery of these exploitation areas [New South Wales, Environment Protection Authority, EPA Home Page, Mining and Quarrying, Sydney, Australia] consists in restoring the surface in a stable and permanent way that matches the characteristics of the area: the long-term objective must be to provide permanent, self-managing and/or productive vegetation cover.

In this sense, the general objective of this invention is to provide a process for soil recovery that allows recovering quarries and where it would be possible to isolate acid-producing microorganisms from the soil which could adhere to biological material such as plant roots and use the nutrients secreted by the roots for growth. In turn, the production of acids by these microorganisms would solubilise soil nutrients and allow plant growth. Given the nature of calcareous soils, the formation of acids would also involve the solubilisation of carbonates, thus forming micropores that would in turn favour the establishment and taking root of the plants used in the recovery. The plant/microorganism interaction in the recovery of these quarries must be considered as a process of induced symbiosis that enhances environmental recovery.

**State of the prior art**

Calcareous soils usually have light tones and are usually stony and shallow areas with a high content in insoluble calcium carbonates. One advantage of calcareous soils is that with the appropriate actions we can establish aromatic plants (rosemary, lavender, common mallow, bellflower, sage, chrysanthemum, laurel, lilac, oleander, etc.) and several herbaceous plants. One drawback we can mention is that the nutrients are generally poorly assimilated due to the relatively alkaline pH values in these soils. Carbonates can be solubilised by adding acids, which eventually leads to the release of $CO_2$. In general, carbonates are not necessary for the growth of microorganisms and are therefore biologically relatively inert, although heterotrophic microorganisms have been described that are capable of using carbonate and bicarbonate in order to generate $CO_2$ that can be assimilated as a source of carbon.

Biological attacks on carbonates are related to the biodeterioration of stone monuments and attacks on stone by microorganisms. The reaction associated to biodeterioration is the generation of acids in the carbon or nitrogen metabolism. Nitrifying organisms have thus been described that transform ammonia into nitrate, generating protons in the process, which in turn act as carbonate solubilisers. Microorganisms have also been described which during growth generate gluconic acid from glucose or glutaric acid from the metabolism of certain amino acids (Revelles, O., Espinosa-Urgel, M., Molin, S., and Ramos, J.L. (Journal of Bacteriology, vol. 186, pp. 3439-3446). One way or another, this mainly generates weak acids that contribute towards the solubilisation of the carbonates and nutrients that are insoluble at alkaline pH values.

Patent CN101322974, "Soil heavy metal passivation agent for vegetable field" describes a heavy metal passivation agent for vegetable fields consisting in lime, an organic fertiliser to eliminate heavy metals and expanded perlite for the ecological and industrial recovery of a vegetable field. Patent KR20080088000 describes a process for preparing a soil improving agent that can neutralise acidic soils and increase their permeability to air and their water holding capacity. The process, which includes the use of expanded vermiculite, consists in expanding vermiculite by quick heating and breaking the expanded vermiculite into particles of 4-7 mm, eliminating any chlorite impurities and drying these, heating the chlorite in an oven in order to remove all moisture from the mineral, grinding the chlorite until obtaining a fine powder, carbonising seashells at 1200-1300°C and transforming them into powder in order to obtain a fine powder of calcium carbonate, and finally mixing the vermiculite powder, the chlorite powder, the the calcium carbonate powder and a sulphide powder and packaging the mixture. Patent RU2004132410, "Composition for recultivation of open-cut mines and disturbed lands" relates to the recovery of soil at oil extraction sites, in particular for revegetating open-pit surface mines and disturbed soil using a composition comprising a 1:1 sand-peat mixture as a mixing agent and an absorbent (49-69% in vol.), 30%-50% of silt and up to 1% of active additives used to reduce the concentration of soluble oil products and their toxicity and to neutralise the peat by increasing the pH from 3-4 to 6-7.5.

European Patent Application EP 1778817A1 "Procedure for soil consolidation, comprises using calcifying bacteria, nutrient solution(s) and denitrifying bacteria fed into the soil through boreholes round the zone to be consolidated" describes a soil consolidation process comprising adding to the soil one or more solutions containing calcifying bacteria chosen from the families *Bacillaceae, Pseudomonadaceae, Enterobacteriaceae* and *Myxococcal,* circulating the solutions and supplying one or more nutrient solutions for the bacteria. The soil is then fed with one or more nitrifying bacteria that are also circulated through the soil. Patent JP 1245088 A "Soil conditioner produced by using a mucous bacteria" provides a soil conditioner containing a bacteria chosen from the genders *Myxococcus, Alcandium, Cystobacter* and *Polangium* with bacteriolytic activity.

## Description of the invention

In general, this invention has as an object to provide a process for the recovery of degraded soil, in particular in quarries, based on the isolation of acid-producing microorganisms from the soil, the adhesion of such microorganisms to biological materials such as plant roots, which take up the nutrients secreted by the roots for growth, wherein the production of acid by the microorganisms allows solubilising the soil nutrients and therefore enhances plant growth, while also allowing the solubilisation of carbonates, thus forming micropores, which also improve the establishment and taking root or the plants used in the recovery. The association of microorganisms with these plants enhances their establishment by generating better conditions for them to take root. These properties may be found in a single microorganism or they may be combined through the establishment of microbial consortiums facilitating said activities.

In particular, this invention has as an object to provide a process for soil recovery, in particular in quarries, based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* the adhesion of these microorganisms or a consortium thereof to the roots of plants by immersing the root ball, colonisation of the rhizosphere of said plants by the microorganisms and revegetation of the soil to be treated with them.

The generation of H$^+$ involves facilitating the conversion of carbonate into bicarbonate and of the latter in turn into $CO_2$ as in the following general diagram:

$$CO_3^{2-} \leftrightarrow HCO_3^- \leftrightarrow CO_2 + H_2O$$

The conversion from bicarbonate ($HCO_3^-$) into $CO_2$ is monitored using $^{14}HCO_3^-$ and collecting $^{14}CO_2$ in a KOH trap. The generation rate of $^{14}CO_2$ by these four microorganisms is greater than 20,000 DPM in 24 h.

A second object of this invention consists in providing a process for soil recovery, in particular in quarries, based on isolating acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* the adhesion of these microorganisms or a consortium thereof to the seeds of plants by immersing the seeds in an inoculation solution of such microorganisms, and after the growth of the seedlings, revegetating the land to be treated with them.

The acid-producing microorganisms, chosen from *Pseudomonas putida* BE2, *Pseudomonas brassicacearum* strain GO12, *Flavobacterium denitrificans* strain GOR5 and *Pseudomonas* sp. strain SER3, adhered to the rhizosphere of the plants, use the nutrients secreted by the roots for growth, and the production of acid by the microorganisms solubilises the nutrients in the soil and thus enhances plant growth, and also solubilises carbonates, producing micropores which in turn improve the establishment and taking root of the plants used in the land to be treated.

Another object of the invention derives from the fact that some of these microorganisms show a high ability to adhere to biotic and abiotic surfaces thanks to the properties of their external membrane, and can therefore be associated in high densities with different solid materials.

Therefore, a third object of the invention is to provide a process for soil recovery, in particular in quarries, based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* a mixture of the microorganisms or a consortium thereof with a solid support such as sepiolite, bentonite, peat, perlite or cork chips, preferably peat, the adhesion and incubation of such microorganisms or a consortium thereof to the solid support and finally supplying the inoculated solid support to the land to be treated.

The adhesion of the microorganisms onto a solid support facilitates their handling and the controlled introduction of the microorganisms in any process. Similarly, the bacteria associated to solid elements may be added to different formulations in which solubilising carbonates may be desirable.

Reforestation techniques based on pine trees, bushes and grass for pasture coverage are being used to facilitate quarry recovery. The association of microorganisms with these plants enhances their establishment by generating better conditions for them to take root.

The four microorganisms or a consortium thereof may be formulated in a liquid or solid for application.

**Brief description of the drawings**

| | |
|---|---|
| Figures 1A, 1B, 1C, 1D and 1E: | show a set of possible microorganisms to be used in the embodiments of this invention. The carbon source and the sample origin can be used to identify the microorganisms: the legend G, B, GL and S means that they were isolated in glucose, benzoate, glycerol and sucrose, respectively. The legends M, E and O indicate soils from a corn field, a garden and an olive grove, respectively. The legend R indicates rhizosphere soil, that is, soil that is bound to the root; red, blue and NaHCO3 relate to the addition of phenol red, bromophenol blue and bicarbonate, respectively. Crosses (X) in colour and morphology indicate that the colonies were not whitish and/or did not present smooth edges. Gram relates to the stain result, whether it was Gram - or Gram +. APINE indicates the microorganism identified using this nutritional test, providing the number code obtained. |
| Figure 2: | Production of $^{14}CO_2$ from $H^{14}CO_3$. |
| Figure 3: | Growth curves for the different microorganisms in an M9 minimal medium supplemented with micronutrients (MM9) (Abril et al., 1989, J. Bacteriol. 171:6782-6790) + 0.2% glycerin (33.4% glycerin + 20.5% methanol). |
| Figure 4: | Growth curve for different microorganisms in MM9 + 0.2% glycerin (33.7% glycerin + 7% methanol). |
| Figure 5: | Growth curve for different microorganisms in MM9 + 0.2% glycerin (49.5% glycerin without methanol). |
| Figure 6: | Growth curve for different microorganisms in MM9 + 0.2% white sugar. |
| Figure 7: | Growth curve for different microorganisms in MM9 + 10 mM glucose. |

**Embodiments of the invention**

According to the first object of this invention, a first embodiment thereof provides a process for soil recovery, in particular in quarries, based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* the adhesion of these microorganisms or a consortium thereof to the roots of plants by immersing the root ball, colonisation of the rhizosphere of said plants by the microorganisms and revegetation of the soil to be treated with them.

According to the second object of this invention, a second embodiment thereof provides a process for soil recovery, in particular in quarries, based on isolating acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* the adhesion of these microorganisms or a consortium thereof to the seeds of plants by immersing the seeds in an inoculation solution of such microorganisms, and after the growth of the seedlings, revegetating the soils to be treated with them.

According to the third object of the invention, a third embodiment thereof provides a process for soil recovery, in particular in quarries, based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, preferably *Flavobacterium denitrificans,* a mixture of the microorganisms or a consortium thereof with a solid support such as sepiolite, bentonite, peat, perlite or cork chips, preferably peat, the adhesion and incubation of such microorganisms or a consortium thereof to the solid support and finally supplying the inoculated solid support to the land to be treated.

**Materials and Methods**

*1. Isolation and identification of microorganisms*

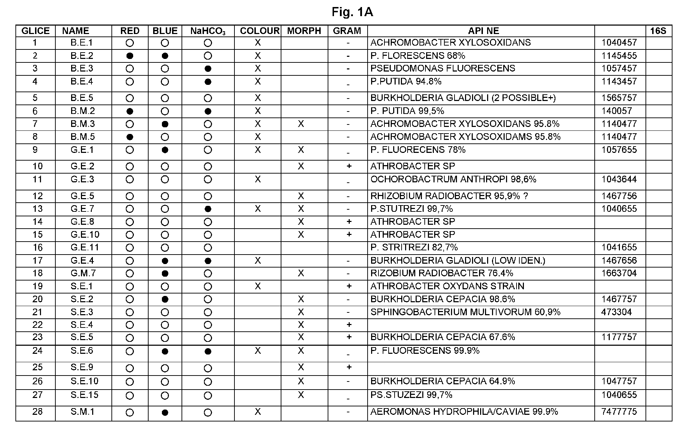

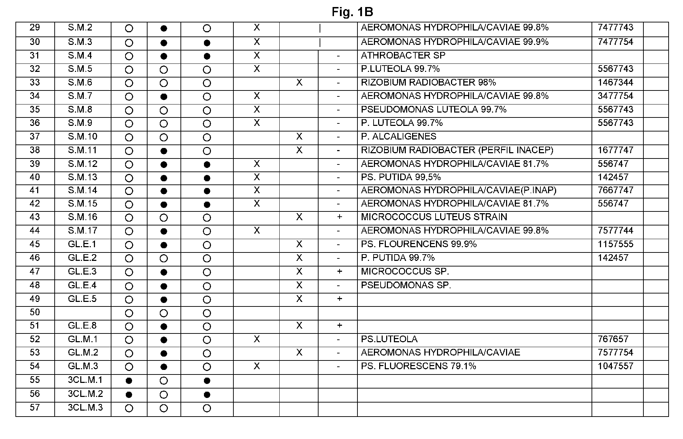

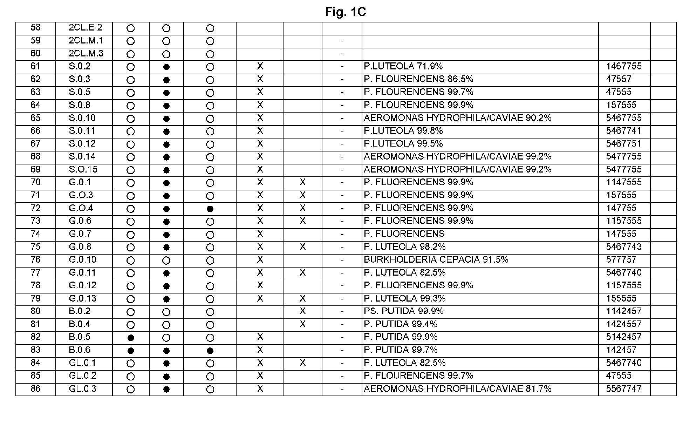

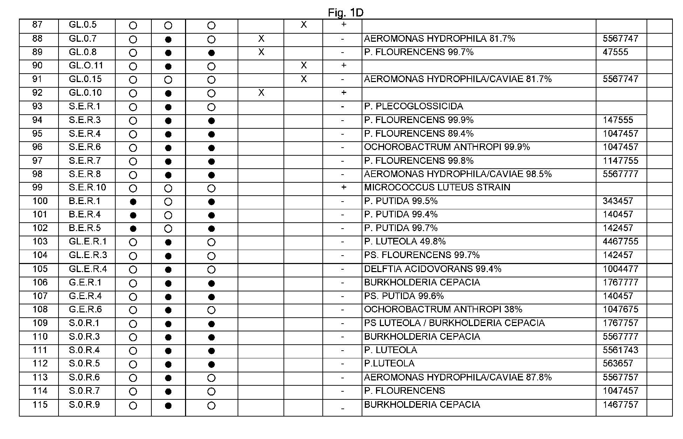

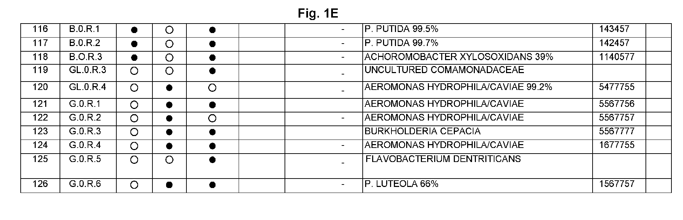

Samples (10 g) were taken from soils from a garden, an olive grove with red cambisol soil and from a corn field. Corn seeds were sown in these soils, and when they germinated they were incubated for 15 days in a greenhouse. After this period, the plants were uprooted and samples were taken from the rhizosphere (soil stuck to the roots) of the plants for selection of the microorganisms. The samples were enriched in an MA medium with insoluble phosphates (150 mg/l) to which different carbon sources had been added, such as glucose (0.5% weight/vol), sucrose (0.5% weight/vol), benzoate (10 mM) and glycerol (10 mM). Insoluble phosphates were used for selection, from amongst the phosphate solubilisers, of those that may lead to acid production. The microorganisms were isolated by streaking on agar plates with an M9 minimal culture medium (Abril et al., 1989, J. Bacteriol. 171:6782-6790) and the same carbon source from the enrichment culture. They were cultured at 30°C for at least two days. A selection of all the microorganisms isolated was placed in different culture mediums in order to isolate those that can solubilise carbonates, for which a pH indicator was added such as phenol red (0.02 g/l) (red at pH > 8.5 and yellow at pH < 8.5) or bromophenol blue (0.1 g/l) (blue at pH > 7 and green at pH < 5). Figure 1 shows a set of microorganisms from the first selection. The microorganisms were identified by the Gram test, which differentiates Gram positive from Gram negative organisms. The Gram negative organisms were subjected to API-NE nutritional tests. A number of clones were identified by 16S ribosomal RNA sequencing using as primers for PCR amplification the primers called 27F (5'-agagtttgatcmtggctcag-3') and 1492-R (5'-tacggytaccttgttacgactt-3'). Amplification was carried out under standard conditions for 30 cycles.

*2. Culture of the selected microorganisms*

The selected microorganisms were cultured in an M9 minimal medium with glucose at 30°C, 150 rpm and for 48 h. The microorganisms were inoculated (at a 1:50 dilution) in flasks with 20 ml of the same minimal medium with glucose, to which 0.062 $\mu$Ci/ml of sodium bicarbonate were added. If acid is produced in the process it is following the reaction below:

$$^{14}HCO_3{''} + H^+ \; ^{14}CO_2 + H_2O$$

The flasks contained a small vessel in which 2 ml of KOH (2M) were placed to trap the $^{14}CO_2$ released. The KOH and culture medium samples were collected at the end of the test and they were introduced into tubes with scintillation liquid. The amount of $^{14}CO_2$ released was then measured using a Geiger counter.

*3. Microorganism adhesion to the seeds*

The corn seeds used for the test were sterilised by washing with distilled water, followed by washing with 70% ethanol for 10 minutes and two washings with 20% bleach for 15 minutes, finally washing them again with distilled water. The seeds were hydrated by introducing them into Petri dishes that included filters impregnated with water with penicillin G (20 ml of water + 20 $\mu$l of penicillin G (1,000x)) and were kept on the plates overnight at 30°C. The microorganisms had been cultured in the M9 medium and their density was adjusted to $5 \times 10^5$ CFU/ml. The seeds were introduced into the bacterial suspension for 1 h at 30°C without stirring. They were then washed with distilled water and transferred to a 1 x M9 medium and vortexed. They were washed again with distilled water and suspended in a 1 x M9 medium to which glass pearls of 0.3 mm in diameter were added so that, when stirring, the microorganisms were detached from the seeds and could thus be counted by serial dilutions that were plated on an M9 medium with benzoate or glucose as a carbon source.

*4. Root system colonisation tests*

The procedure in this series of tests was basically the same as in the adhesion tests, except that once the microorganisms were adhered to the clover or corn seeds these were placed on pots containing a 1:1:1 mixture of soil: sand:peat. This artificial substrate was watered to allow the seeds to germinate and develop their root systems. The pots were incubated in a greenhouse at 22°C with natural light/ darkness cycles. The pots were watered once a week by capillary action. After 15 days in the greenhouse, the plants were removed from the soil. The soil that remains stuck to the roots, called rhizosphere, was used for the microorganism count. The data is provided as Colony Forming Units per gram of soil and consists in the mean of at least two triplicate counts from three different pots. The root balls of pine trees, rosemary, holm oaks and white cedars were inoculated by immersion in a 1 litre solution of M9 + glucose containing 250 ml of culture and 750 ml of $H_2O$ for 5 minutes. The number of microorganisms varied between 4 X $10^8$ and 1 X $10^9$ CFU/ml. The plants were then transplanted to pots with a previously autoclaved sand/soil mixture and were kept under controlled conditions in the greenhouse (20°C at day and 16°C at night). For three months, 1 g samples were taken from the rhizosphere of the inoculated plant with adjacent substrate.

*5. Halo formation in medium with methylene blue*

The steps followed are the same as those of point 1 regarding the streaking of microorganisms on solid media with agar, except in that the phosphorous source was insoluble calcium phosphate. The solubilisation of phosphate due to acidification of the medium was observed by the formation of a light coloured halo that indicated the potential of the microorganisms to grow in the medium, mainly thanks to the production of acids.

*6. Survival on solid supports*

Sepiolite and Bentonite

The procedure was the following: First of all the inorganic support (sepiolite, bentonite) was autoclaved and dried and 5 ml of culture were added per gram of the support to be used, and after stirring for 60 minutes the clay was allowed to settle (at least 1 h) and dilutions of the supernatant fluid were streaked on dishes. The sediment was stirred again for 1 minute and 1 ml of the resuspended mixture was filtered through a 0.45 $\mu$m filter, streaking dilutions on dishes of both the filtered fluid and the material that remained on the support.

Peat

The procedure was the following: the peat was autoclaved and dried (30 g per pot and inoculation). Dilutions of culture mediums were prepared in order to add $10^6$ and $10^4$ cells per gram of peat in each pot. The pots were kept at 20°C in darkness. The mixture was homogenised and 1 g of peat was taken after 1, 7, 15 and 30 days after the inoculation and the microorganism counts were performed on selective mediums.

Perlite

The same procedure was followed as for peat, except that 15 grams of perlite were autoclaved and dried per pot and per dilution.

Cork chips

The same procedure was followed as for peat, except that 15 grams of cork chips were autoclaved and dried per pot and per dilution.

*7. Carbonate solubilising microorganisms*

A large amount of acid/base reactions take place as a result of the carbon and nitrogen metabolism of living organisms. In the solubilisation of phosphates in the soil by microorganisms, one of the mechanisms used is that of acidifying the medium by generating weak acids. There are many microorganisms that are capable of acidifying the culture medium, which would allow generating $CO_2$ and $H_2O$ from bicarbonate/carbonates. In order to detect the $CO_2$ released from this reaction, we designed a test with $^{14}$C-marked sodium bicarbonate, such that when a KOH trap (2M) is introduced, it traps the [14]$CO_2$ formed in the reaction. The $^{14}$C is measured in a scintillation counter, which allows quantifying the amount of sodium bicarbonate solubilised.

**Results**

*Test to identify the solubilisation of carbonates*

Using the culture mediums described in the Materials and Methods based on minimal medium with insoluble phosphate, a total of 523 microorganisms (Series A) were isolated in aerobic conditions using glycerol, sucrose, glucose and benzoate as carbon sources and 56 microorganisms (Series B) in medium without stirring and with glucose or sucrose as the carbon source. In order to determine whether or not the organisms produce acid, the whole assembly was subjected to a test in the presence of phenol red, so that those that turned the medium yellow could be considered as potential proton producers. 126 microorganisms were identified that could produce acid and use this potential to solubilise phosphates. These microorganisms were tested again to confirm the results and perform further tests. The results from this series are shown in Figure 1. All the clones were tested again in the same medium in order to confirm their stability.

In this series 106 microorganisms confirmed their stable nature and only 6 turned the medium orange, 4 did not grow and 10 remained red. All 126 microorganisms were also tested in the medium, in the presence of bicarbonate, the pH of the medium being above 9. 66 of these did not grow, and 34 remained red, whereas the rest turned yellow or orange, thus indicating growth and the production of acid. Figure 1 also shows the most relevant data regarding the smooth (marked with an X in Figure 1) or rough morphology (without markings in Figure 1) of the colonies and their Gram staining data.

*Identification of microorganisms*

The use of microorganisms in the environment requires them not to have harmful effects on the environment, animals and plants. It is therefore necessary to identify them as accurately as possible. The first definition is based on the cell wall of the microorganisms, which are classified as Gram positive or Gram negative. It was observed that of the 126, 20 corresponded to the Gram positive group and the rest were Gram negative. Gram negative microorganisms were subjected to an API-NE nutritional test, consisting in a series of biochemistry and growth tests to identify the microorganism. The figures of the API test results are shown in Figure 1. These tests provide a number key that aid their identification, although they could not always be assigned to a group. In order to confirm this identification, the microorganisms were also characterised by analysing the DNA encoded by the 16S RNA, using the oligonucleotides 27F and 1492R described in the Materials and Methods, the DNA template of all microorganisms and Taq polymerase for DNA amplification by PCR. 57 clones were kept for further testing based on the results obtained. These microorganisms were once again subjected to the phenol red test in order to test their stability, observing that most turned the medium yellow, indicating that they were solubilising the insoluble phosphate in the medium by producing $H^+$.

*Solubilisation of the $^{14}C$-marked sodium bicarbonate in the medium*

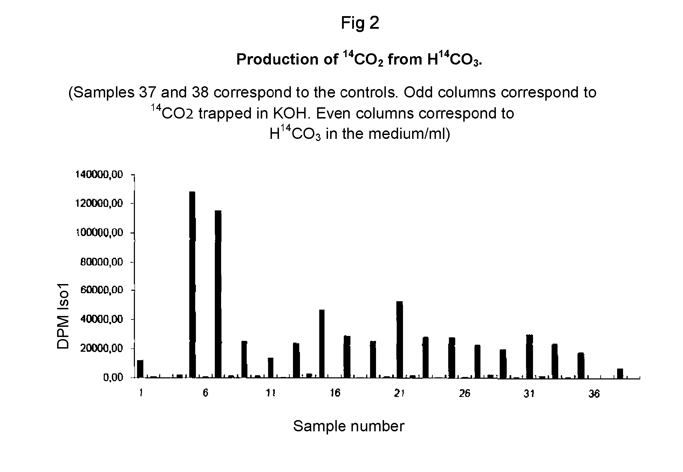

In order to verify that these microorganisms could produce $CO_2$ from sodium bicarbonate, the tests described in the Materials and Methods were performed with $H^{14}CO_3$, such that the $^{14}CO_2$ produced as a gas was collected in a KOH trap (2M). The $^{14}CO_2$ was then measured as Disintegrations Per Minute (DPM) in a scintillation counter. The rate of production of $^{14}CO_2$ from bicarbonate was found to vary for the different microorganisms (see Figure 2). After this test any microorganisms with a production rate of less than 8000 DPM, representing less than 10% of the maximum production of $^{14}CO_2$, were rejected. In total, this type of test allowed reducing the number of clones to 25. Table 1 below shows the clones chosen, their possible identification based on API-NE tests and the 16S RNA gene sequence analysis.

**Table 1**

| Microorganisms that solubilise carbonates. Identification by 16S sequence analysis, release of $^{14}CO_2$ and adhesion and colonisation test | | | | | |
|---|---|---|---|---|---|
| Name | APINE | 16S | Adh. CFU/ml | DMPIso1 | Coloniz. |
| BE1 | *Achromobacter xylosoxidans* | *Pseudomonas sp. HRB- 11, or P. alcaligenes* | $3x10^2$ | 39920 | $15x10^b$ |
| BE2 | *P.fluorescens* 68% | *P. putida* | $6.7x10^4$ | 24012 | $30x10^b$ |
| BE3 | *P.fluorescens* | *Pseudomonas sp.* | $3.3x10^4$ | 29664 | $22x10^b$ |

(continued)

| Microorganisms that solubilise carbonates. Identification by 16S sequence analysis, release of $^{14}CO_2$ and adhesion and colonisation test | | | | | |
|---|---|---|---|---|---|
| Name | APINE | 16S | Adh. CFU/ml | DMPIso1 | Coloniz. |
| SE6 | P.fluorescens 99% | P. brassicacearum | $2x10^2$ | 21362 | $29x10^b$ |
| GLM3 | P. fluorescens 79,1 % | Arthrobacter sp. | $1.7x10^3$ | 26604 | $4.5x10^b$ |
| GLE1 | P. fluorescens 99.9% | P. brassicacearum | $7.7x10^4$ | 25495 | $42x10^4$ |
| GO12 | P. fluorescens 99.9% | P. brassicacearum | $8x10^3$ | 25168 | $12x10^4$ |
| SER3 | P. fluorescens 99.9% | Pseudomonas sp. | $9x10^4$ | 28188 | $6.5x10^4$ |
| GLE2 | P. putida 99,7% | P. fluorescens | $5x10^4$ | 30218 | $17x10^4$ |
| BER1 | P. putida 99,5% | Delftia sp. * | $8.2x10^4$ | 30075 | $15x10^b$ |
| SE3 | Sphigobacterium multivo | F. sphingobacterium * | $4x10^2$ | 51945 | $5.1x10^b$ |
| SE15 | Stutzeri 99,7% | P. brassicacearum | $3x10^3$ | 25180 | $4.2x10^4$ |
| GLER4 | Delftia acidovorans 99.4% | P.plecoglossicida | $1.6x10^b$ | 13902 | $6.2x10^b$ |
| GLOR3 | Gram - | Comamonadaceae * | $2.6x10^4$ | 12963 | $5x10^b$ |
| SM4 | Gram - | Arthobacter sp. | $5x10^3$ | 27224 | $5x10^4$ |
| GLE3 | Gram + | Pseudomonas sp. | 1.5x103 | 45600 | $7.4x10^b$ |
| GLE4 | Gram - | Pseudomonas sp. | $4.1x10^3$ | 29126 | $4.8x10^b$ |
| SER1 | Gram - | P. plecoglossicida | $1.5x10^3$ | 15693 | $3.7x10^b$ |
| GOR5 | Gram - | Flavobacterium denitrificans | $4.6x10^4$ | 8810 | $9.6x10^b$ |
| GO11 | P. luteola 99,8% | P. agglomerans | $1x10^b$ | 13918 | yes |
| Name | APINE | 16S | Adh. CFU/ml | DMPIso1 | Coloniz. |
| GO8 | P. luteola 98,2% | P. agglomerans | $1.1x10^b$ | 127876 | yes |
| GO11 | P. luteola 98,2% | P. brassicacearum | $26x10^4$ | 115126 | yes |
| J14 | Gram + |  | $28x10^4$ | 23202 | $15x10^b$ |
| J34 | Gram + |  | $9x10^3$ | 33634 | $15x10^b$ |
| SM10 | Gram - | P. alcaligenes | $4x10^2$ | 33634 | yes |
| This shows the adhesion and colonisation rates for corn seeds and seedlings by the strains indicated and the release rate of $^{14}CO_2$ in 24 hrs. | | | | | |

*Microorganism* adhesion *to the corn* seeds *and colonisation of the root system*

The 25 microorganisms were subjected to adhesion tests for adhesion to corn seeds and colonisation of the root systems of herbaceous plants according to the protocols shown in the Materials and Methods section in order to select those that are viable in soils. The adhesion rate varied between $3 \times 10^2$ and $1.6 \times 10^5$ microorganisms/seed. The

colonisation rates ranged between $3 \times 10^4$ and $3 \times 10^6$ (Table 1), indicating that there is great variability in the ability to proliferate in the root system. On the other hand, no strict correlation was found between adhesion and colonisation capacities, although when the values are represented as a point cloud it shows that the microorganisms that generally adhere well also colonise the root system of the plants well. In order to further narrow the selection in this group we considered as a first factor that the organism could be potentially pathogenic. This led to rejecting 6 more microorganisms, despite no harm having been observed in tests on plants. None of these rejected clones S011, GLE3, GO8, GLOR3, BER1 and GLM3 showed any significant advantages over the others. The remaining 19 clones were subjected to the Pikovskaya test in order to measure the solubilisation of insoluble phosphorus by acidification of the medium, indicating a further potential for the microorganisms that could be used to discriminate between the clones. The results are shown in Table 2 and are + or -, a positive value indicating that a halo is formed and a negative value showing the absence of a halo. We also know that the diameter of the halo is related to the acidification of the medium, such that the greater the halo the greater the production of acid. We therefore determined halo size as a discriminatory feature. We obtained 10 positive clones, and of these 4 produced a halo of 1 cm or more, these four BE2, GO12 GOR5 and SER3 being those chosen for subsequent tests.

**Table 2**

| Pikovskaya test and halo size | | | | | |
|---|---|---|---|---|---|
| Name | Result | Halo (cm) | Name | Result | Halo (cm) |
| BE1 | - | - | SE15 | - | - |
| BE2 | + | 1.0 | GLER4 | + | 1.5 |
| BE3 | + | 0.5 | GLOR3 | + | 0.5 |
| SE6 | - | - | GLE3 | - | - |
| GLM3 | + | 0.2 | GLE4 | + | 0.5 |
| GLE1 | - | - | SER1 | + | 1.5 |
| GO12 | + | 1.5 | GOR5 | + | 1.2 |
| SER3 | + | 2.0 | GO11 | - | - |
| GLE2 | - | - | J14 | - | - |
| BER1 | - | - | J34 | - | - |
| SM10 | - | - | | | |
| Minimal medium M9 with with 3% insoluble calcium phosphate was used. | | | | | |

Several antibiotic resistance tests were performed to use this natural feature as a marker in tests of simultaneous inoculation in the rhizospheres of plants. The results obtained are shown in Table 3. The tests were performed on rich LB medium dishes on which filters impregnated in the antibiotic were placed. The formation of a halo around the disk involved the inhibition of growth, whereas the absence of a halo involved resistance to the antibiotic.

**Table 3**

| Discrimination profile for strains based on their resistance to antibiotics | | | | | |
|---|---|---|---|---|---|
| Strain | Rif | Tc | Sm | Cm | Cm/Nal |
| BE2 | + | - | + | + | + |
| SER3 | - | + | - | + | - |
| GOR5 | + | | - | + | - |
| GO12 | - | | + | + | + |
| Final concentration of antibiotics 20 $\mu$g/ml of rifampin (Rif), 10 $\mu$g/ml of tetracycline (Tc), 25 $\mu$g/ml of streptomycin (Sm), 30 $\mu$g/ml of chloramphenicol (Cm) and 15 $\mu$g/ml of nalidixic acid (Nal); + = resistant; - = sensitive | | | | | |

*Colonisation by the microorganisms selected from the rhizosphere* of *holm* oaks, *pine* trees, *rosemary and*

*cypress* trees.

The trees and bushes used were holm oaks, pine trees, rosemary and cypress trees as model plants. The tests were performed according to the information included in the Materials and Methods section. The root balls of small plants were immersed in solutions of the four microorganisms containing between 3.5 x $10^8$ and 1.2 X $10^9$ cells per ml of the four strains selected, i.e. BE2, SER3, GOR5 and GO12 The colonisation was monitored during a period of three months on selective medium dishes for each strain. The results for the four plants with the four strains are shown in Table 4. First of all, it could be observed that all the strains were capable of establishing themselves in the root systems of all four plants, the colonisation values being similar over time and with a global average value of about $10^6$ CFU/g of rhizosphere soil. This value is similar to that of the strains considered to be good colonisers of the root system of plants, and we can even highlight values of > $10^7$ CFU/g of soil after three months in the case of GOR5 and GO12 in cypress trees. After three months, the strain SER3 showed lower colonisation values, but its value was still significant.

**Table 4**

| Colonisation of the root system by the strains indicated | | | | |
|---|---|---|---|---|
| Culture/plant | Rhizosphere 1 g | | | *P. putida* |
| **BE2** | **Month 1** | **Month 2** | **Month 3** | **Dish** |
| Holm oak | 6x $10^b$ | 8 x $10^/$ | 6.2 X $10^S$ | LB + Sm |
| Pine tree | 1.6 X $10^s$ | 1.2 x 10' | 5 X $10^{b)}$ | LB + Sm |
| Cypress tree | 3 x $10^s$ | 1.1 x 10' | 1.4 x 10' | LB + Sm |
| Rosemary | 1.1 x 10' | 5 X $10^8$ | 4 x $10^/$ | LB + Sm |
| Microorganism | Rhizosphere 1 g | | | *Pseudomonas sp.* |
| **SER3** | **Month 1** | **Month 2** | **Month 3** | **Dish** |
| Holm oak | 8.8 X $10^S$ | 6x $10^b$ | 7 X $10^{b)}$ | LB + Cm |
| Pine tree | 5.8 X $10^S$ | 2 X $10^{b)}$ | 4 X $10^{b)}$ | LB + Cm |
| Cypress tree | 1.4 x 10' | 2 X $10^{b)}$ | 9 X $10^{b)}$ | LB + Cm |
| Rosemary | 9.8 x 10 = 6 | 8 x $10^5$ | 2.6 x $10^5$ | LB + Cm |
| Microorganism | Rhizosphere 1 g | | | *Flavobacterium denitrificans* |
| **GOR5** | **Month 1** | **Month 2** | **Month 3** | **Dish** |
| Holm oak | 2 x 10' | 3.6 X $10^S$ | 1.2 X $10^S$ | LB + Rif |
| Pine tree | 2.2 x $10^s$ | 8 X $10^S$ | 4.6 X $10^S$ | LB + Rif |
| Cypress tree | 5.2 X $10^S$ | 3.4 X $10^S$ | 1.4 x $10^s$ | LB + Rif |
| Rosemary | 3.2 x $10^s$ | 5.2 X $10^S$ | 4.8 x $10^s$ | LB + Rif |
| Microorganism | Rhizosphere 1 g | | | *Pseudomonas brassicacearum* |
| **GO12** | **Month 1** | **Month 2** | **Month 3** | **Dish** |
| Holm oak | 4 x $10^5$ | 8 x $10^5$ | 3.6 x $10^5$ | LB + Cm |
| Pine tree | 9.2 x$10^s$ | 7.8 X $10^s$ | 2.2 x $10^b$ | LB + Cm |
| Cypress tree | 8.8 X $10^S$ | 3 x $10^s$ | 1.1 x 10' | LB + Cm |
| Rosemary | 4.4 X $10^S$ | 4.2 x $10^b$ | 1.8 X $10^S$ | LB + Cm |

(continued)

| Microorganism | Rhizsphere 1 g | | | *Pseudomonas brassicacearum* |
|---|---|---|---|---|
| GO12 | Month 1 | Month 2 | Month 3 | Dish |
| Cell density is shown in CFU/g of rhizosphere soil. The results are the average of three plant counts. The samples were taken 30, 60 and 90 days after immersing the root balls in a suspension of the microorganisms ($10^8$-$10^9$ CFU/ml). The counts were performed on selective medium dishes according to the resistance profile determined in Table 3 | | | | |

*Microorganism survival on the solid supports: peat, sepiolite, bentonite, perlite and cork chips*

These tests had a double purpose. On the one hand to establish a system through which the handler is exposed as little as possible to the microorganisms, despite them not being pathogenic, and on the other to facilitate introduction of the microorganisms in the quarry. The supports used were sepiolite, bentonite, peat, perlite, cork chips. The specific protocols for use are those indicated in the Materials and Methods section.

First of all we checked adhesion to bentonite and sepiolite clays, for which the culture of microorganisms, after incubation, was mixed with the clay, filtered with a 0.45 $\mu$l pore size to retain particles and the counts were performed. Adhesion to sepiolite was observed to be 100 times less efficient than adhesion to bentonite, reaching in these cases cell densities of up to $10^8$ CFU/filter (see Table 5). Nevertheless, when the filters were dried, the four microorganisms rapidly lost their viability. In fact, after 4 days at ambient temperature with a light supply of air, the number of microorganisms had decreased almost three orders of magnitude and were almost undetectable within a week. Therefore, these supports were not appropriate for microorganism maintenance.

Table 5

| Strain counts in the adhesion test to bentonite and sepiolite | | | | | | | |
|---|---|---|---|---|---|---|---|
| BENTONITE | | | | SEPIOLITE | | | |
| Clones | ml | L. supernatant | Filter | Clones | ml | L. supernatant | filter |
| BE2 | 9.07 | 9.13 | 8.07 | BE2 | 9.07 | 9.14 | 6.37 |
| SER3 | 6.3 | 7,9 | 6.65 | SER3 | 6.3 | 7.2 | 3 |
| GOR5 | 7.6 | 8.72 | 8.84 | GOR5 | 7.6 | **8.62** | 6.07 |
| CO12 | 7,9 | 7.79 | 6.38 | CO12 | 7,9 | 7.79 | 4.47 |
| Values given as log CFU/ml | | | | | | | |

With perlite we tested the adhesion of the four strains at three cell densities, $10^6$, $10^4$ and $10^2$ g of perlite (Table 6). No adhesion was observed at the lowest density. At the density of $10^4$ adhesion was observed with the GOR12 and BE2 strains, but not with the other two, whereas at higher densities all strains adhered(Table 6). At this density the microorganisms were viable for at least 30 days for GOR5 and BE2, but not for SER3 or GO12 (Table 6). The cell density of BE2 was of about $10^8$ after 30 days, versus values of about $10^7$ for GOR5. Perlite would therefore be a viable substrate for GOR5 and BE2.

**Table 6**

| Counts for the inoculation test with perlite | | | | | |
|---|---|---|---|---|---|
| BE2 | Day 3 | Day 12 | Day 20 | Day 30 | Dish |
| $x10^s$ | $2x10'$ | $2x1$ | $6x10'$ | $1.6x10^S$ | LB + Sm |
| $x10^4$ | $1.2x10'$ | 0 | 0 | 0 | LB + Sm |
| $x10^2$ | 0 | 0 | 0 | 0 | LB + Sm |
| SER3 | Day 3 | Day 12 | Day 20 | Day 30 | Dish |
| $x10^s$ | $5x10^S$ | $4x10^S$ | $6x10'$ | 0 | LB + Cm |

(continued)

| SER3 | Day 3 | Day 12 | Day 20 | Day 30 | Dish |
|---|---|---|---|---|---|
| x$10^4$ | 0 | 0 | 0 | 0 | LB + Cm |
| x$10^2$ | 0 | 0 | 0 | 0 | LB + Cm |
| **GOR 5** | **Day 3** | **Day 12** | **Day 20** | **Day 30** | **Dish** |
| x$10^s$ | 3x1 | 1.3x$10^9$ | 2x$10^8$ | 2x1 | LB + Rif |
| x$10^4$ | 1.2x$10^S$ | 8.6x$10^8$ | 4x$10^8$ | 1.8x10' | LB + Rif |
| x$10^2$ | 0 | 0 | 0 | 0 | LB + Rif |
| The data is provided in CFU/g of perlite | | | | | |

With peat the mixture of each strain was tested at two different densities, $10^6$ and $10^4$ CFU per g of peat. The use of lower densities was disregarded since results with perlite showed that a minimum number of microorganisms was required to start colonisation. The four strains showed adhesion values of almost 100% of the microorganisms added at the highest density, and at lower densities adhesion was lower, indicating that cell density enhances the aggregation and adhesion of the microorganisms. Long-term survival was then determined and samples were taken 1, 7, 15 and 30 days after inoculation. In general, growth of the microorganisms was observed on this substrate until reaching densities of about $10^8$ to $10^9$ CFU/g of peat, except for GO12, which lost its viability after 15 days. The greater densities were registered with GOR5, BE2 and SER3 (Table 7). This method is easy to use since peat also provides organic matter to the soils in which it is used for the recovery of quarries.

**Table 7**

| Counts of the adhesion and colonisation tests in peat by different strains | | | | | | |
|---|---|---|---|---|---|---|
| | Culture | CFU/g peat | | *P. putida* | | |
| Name | Day 0 | Day 1 | Day 7 | Day 15 | Day 30 | Dish |
| BE2 x $10^6$ | 7x$10^6$ | 7.6x$10^8$ | 4x$10^8$ | | | M9 |
| | | 2x$10^8$ | 1.4x$10^9$ | | | M9+Sm |
| | | 4x$10^8$ | 6x$10^8$ | 2x$10^9$ | 8.2x$10^8$ | LB + Sm |
| BE2 x $10^4$ | 3x$10^4$ | 4x$10^8$ | 2x$10^8$ | | | M9 |
| | | 4.6x$10^8$ | 6x$10^8$ | | | M9+Sm |
| | | 6x$10^8$ | 1.4x$10^9$ | 4x$10^8$ | 5.6x$10^8$ | LB + Sm |
| | Culture | CFU/g peat | | *Pseudomonas sp.* | | |
| Name | Day 0 | Day 1 | Day 7 | Day 15 | Day 30 | Dish |
| SER3 x $10^6$ | 2x$10^6$ | 1.2x$10^8$ | 6x$10^6$ | | | M9 |
| | | 4x10' | 1.2x$10^6$ | | | M9+Cm |
| | | 0 | 2x10' | 8.4x$10^8$ | 2x10' | LB + Cm |
| SER3 x $10^4$ | 2x$10^4$ | 8x$10^s$ | 4x$10^6$ | | | M9 |
| | | 2.6x$10^s$ | 2x$10^6$ | | | M9+Cm |
| | | 0 | 2.2x10' | 8x$10^6$ | 6x10' | LB + Cm |

(continued)

| Name | Culture Day 0 | CFU/g peat Day 1 | Day 7 | *Flavobacterium dentrificans* Day 15 | Day 30 | Dish |
|---|---|---|---|---|---|---|
| GOR5 x $10^6$ |  | $1.8 \times 10^9$ | $2 \times 10^8$ |  |  | M9 |
|  | $4 \times 10^6$ | $8 \times 10^b$ | $8 \times 10^b$ |  |  | M9+Rif |
|  |  | $2 \times 10^S$ | $2 \times 10^8$ | $4 \times 10^8$ | $3.7 \times 10^9$ | LB + Rif |
| GOR5 x $10^4$ |  | $4 \times 10'$ | $1.4 \times 10^9$ |  |  | M9 |
|  | $2 \times 10^3$ | $6 \times 10^6$ | $2 \times 10^6$ |  |  | M9+Rif |
|  |  | $4.4 \times 10^7$ | $8 \times 10^8$ | $5.4 \times 10^9$ | $7.2 \times 10^9$ | LB + Rif |

| Name | Culture Day 0 | CFU/g peat Day 1 | Day 7 | *Pseudomonas brassicacearum* Day 15 | Day 30 | Dish |
|---|---|---|---|---|---|---|
| GO12 x $10^6$ |  | $2 \times 10^8$ | $2 \times 10^9$ |  |  | M9 |
|  | $8 \times 10^6$ | $8 \times 10^8$ | $4 \times 10^8$ |  |  | M9+Km |
|  |  | $4 \times 10^8$ |  | $8 \times 10^6$ | 0 | LB + Km |
| GO12 x $10^4$ |  | $4.2 \times 10^8$ | $2 \times 10^9$ |  |  | M9 |
|  | $1 \times 10^4$ | $2.8 \times 10^8$ | $1.6 \times 10^9$ |  |  | M9+Km |
|  |  | $3 \times 10'$ | $4 \times 10^8$ | $4 \times 10^6$ | 0 | LB + Km |
| The data is provided in CFU/g of | peat | | | | | |

Use of *potential carbon* sources *ofindustrial origin*

In a first approach the growth of the four strains selected was tested in the M9 minimal medium with glycerol, glucose and sucrose, from pure products for laboratory use, as possible carbon sources. The BE2 strain only used glucose for growth, the SER3 strain used glycerin and glucose and GOR5 and GO12 used all three carbon sources (Table 8). As industrial sources, 1% alpeorujo (waste from olive grinding) and 1% bio-algeen (commercial algae extract) and olive vegetation water were used. None of these three sources produced significant growth. Moreover, viability was lost with alpeorujo and bio-algeen. In view of these negative results, these substrates were discarded.

Other three industrial carbon sources were used, which were glycerin mixtures with methanol from biodiesel production, 1 % vermicompost and white sugar. The four strains showed the ability to grow with 1% vermicompost when added to 1 x M9 at an initial density of $10^6$, reaching cell densities of about $10^8$ in 24 h and maintaining this high density for at least another 24 hours (Table 9).

**Table 8**

| Use of carbon sources by strains BE2, SER3, GOR5 and GO12 | | | | |
|---|---|---|---|---|
|  |  | Glycerol | Glucose | Sucrose |
| *P. putida* | BE2 | 0.05 | 1.28 | 0.27 |
| *Pseudomonas sp.* | SER3 | 0.57 | 1.28 | 0.04 |
| *Flavobacterium denitrificans* | GOR5 | 0.89 | 1.53 | 4.49 |
| *P. brassicacearum* | GO12 | **0.68** | 1.34 | 1.31 |
| The data relates to the turbidity values at 600 nm after 24 hours of culture. The initial turbidity was about 0.05 units. The culture medium used was 1 x M9 with 0.05%(w/v) of the carbon source indicated | | | | |

**Table 9**

| Strain count in M9 medium with 1% vermicompost | | | | | | |
|---|---|---|---|---|---|---|
| CFU | 0 h | 4 h | 8 h | 24 h | 48 h | Dishes |
| BE2 |  | $1.2 \times 10'$ | $2.9 \times 10^S$ | $7.5 \times 10^S$ | $1 \times 10^S$ | LB |
| SER3 |  | $2.5 \times 10'$ | $5.8 \times 10^S$ | $2.5 \times 10^S$ | $1.7 \times 10^S$ | LB |
| GOR5 |  | $3.3 \times 10'$ | $5.4 \times 10^S$ | $5.6 \times 10^S$ | $2 \times 10^S$ | LB |
| GO12 |  | $2.7 \times 10'$ | $3.5 \times 10^8$ | $4.5 \times 10^8$ | $1.2 \times 10^8$ | LB |
| The data is provided in CFU/ml | | | | | | |

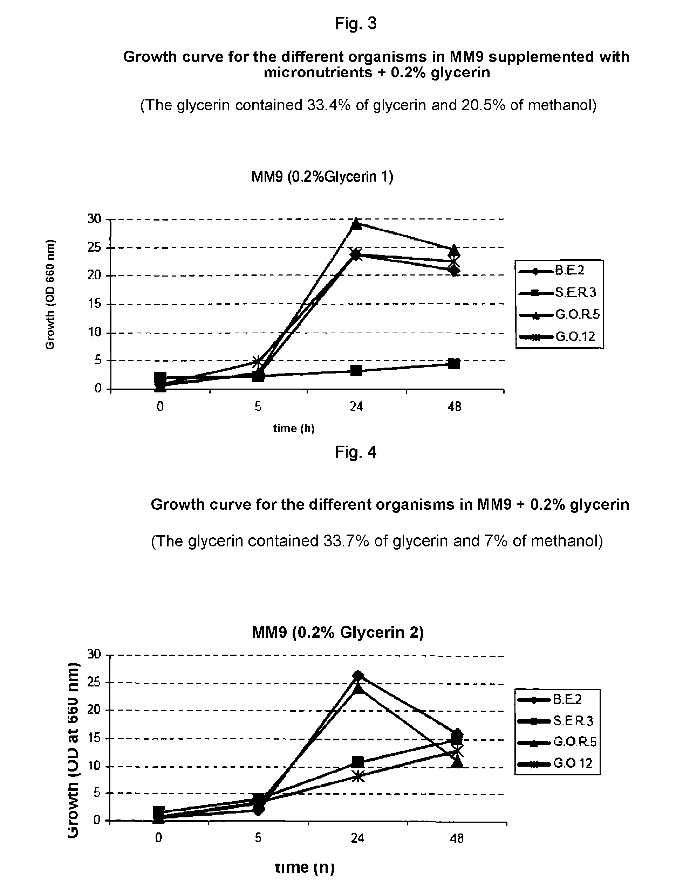

The glycerins used came from different biodiesel plants and contained 33.4% glycerin and 20.5% methanol, 33.7% glycerin and 7% methanol and 49.5% glycerin without methanol. In all cases, the cells were cultured in an M9 medium and the mixture was added with glycerin in order to reach a glycerin concentration of 0.2% (w/v). The cells were incubated for 24 h and cell density was determined over time. The results are shown in Figures 3, 4 and 5. In all cases the strains GOR5 and BE2 reached the greatest turbidity, which managed to exceed 2.5 units. The BE2 strain grew well with a methanol concentration of 7%. The GO12 and SER3 strains grew the worst in all cases.

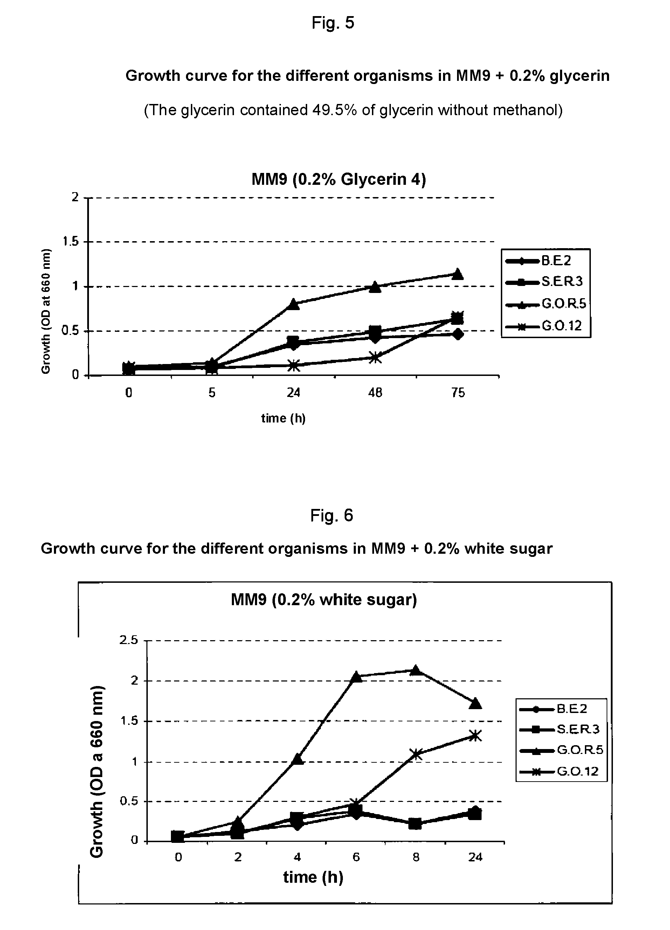

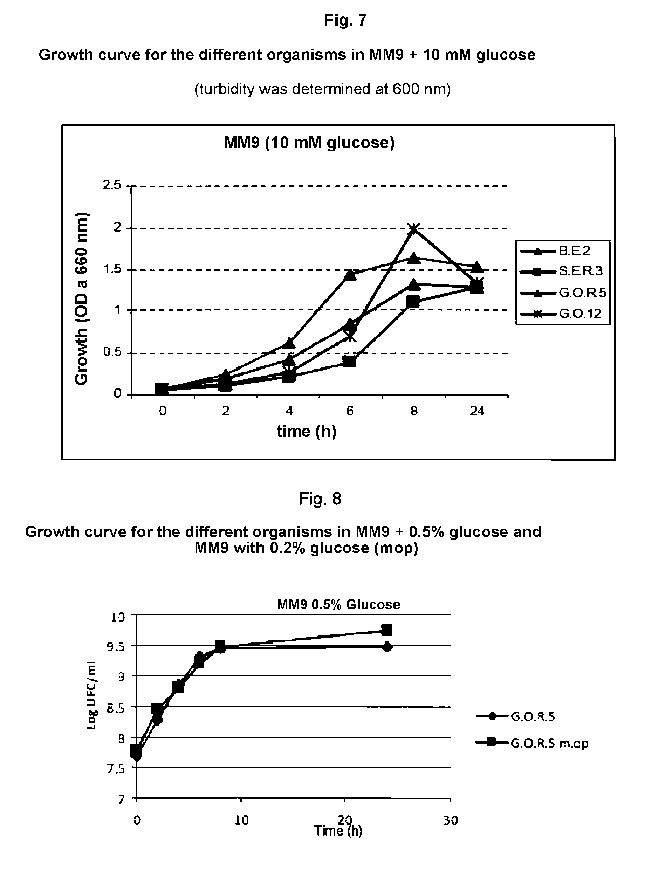

With 0.2% white sugar (v/v) - which is essentially sucrose - the best growth rates were obtained on the GOR5 strain (Figure 6), which reached a turbidity of 2 in 6 h and stayed at a high density for at least 24 h. The GO12 strain also grew with this carbon source, but not the SER3 and BE2 strains. On the other hand, with glucose as the only carbon source, the four strains grew at high densities, reaching a turbidity of 2 in 24 h (Figure 7).

*Test for* GOR5 *growth in a 20 l reactor with nutrients reduced by half*

The data obtained showed that the GOR5 strain was better overall than the rest in most tests. Therefore, a culture was made in a 20 | reactor both with a total load of nutrients and in an optimised medium regarding nutrient reduction, except for the carbon source. In this case the C source was 0.5% glucose (w/v). In this medium, the cultures reached a cell density of about $10^9$ CFU per ml (Figure 8). In order to estimate how well it grows it would suffice to consider mixing the strain with peat, adding 20 ml of culture per kg of peat would produce optimal cell densities for the mixture with pasture seeds or as a substrate for tree saplings. A 20 l reactor would be enough to mix with one tonne of peat. These results indicate that in the first scaling phase GOR5 is viable, and although tests would be required in larger tanks, the perspective for industrial use is excellent.

**Example 1**

The procedure of the invention was applied for the recovery of berms in a quarry in Mijas, using pasture plants. The model plants used in the tests were clover and corn, the first because it is a pasture plant that is easy to use and handle and the second as a laboratory reference, since we have worked with these seeds previously. The protocol used is the one described in the Materials and Methods section. The adhesion rates were from about $10^5$ and $10^6$ per seed, which are excellent adhesion values and similar to those obtained and shown above in Table 4, indicating stability for this characteristic. The inoculated seeds were planted in pots and the number of microorganisms per gram of soil and the effect the microorganisms had on the seeds taking root were determined over time. Clover seeds were immersed in a solution containing $10^8$ CFU/ml of the microorganism used. For the control, the seeds were ) immersed in a solution devoid of any microorganisms. The number of microorganisms was about $10^4$ to $10^5$ per g of soil over 30 days and the size of the clover roots were significantly greater in treated plants than in plants without treatment. The roots were thus 2 to 4 cm longer after 30 days of incubation in all cases, being particularly significant in the cases of GOR5 and SER3. In these two strains the effects on root length could be observed after 20 days from inoculation, with sizes of 9.8 cm in the control versus 11.2 in the seeds treated with GOR5 or SER3 (Table 10). This suggests that treatment with microorganisms will facilitate the establishment of the seeds and their lasting over time.

**Table 10**

| Colonisation of the root system of clover (average of 10 plants) | | | | |
|---|---|---|---|---|
| **Clover** | **10 roots** | | *P. putida* | |
| BE2 | day 10 | day 20 | day 30 | Dish |
| | $4 \times 10^S$ | $5 \times 10^b$ | $3 \times 10^b$ | LB + Sm |
| Root Size (cm) | $5.3 \pm 0.1$ | $9.8 \pm 0.2$ | $11.3 \pm 0.1$ | |
| | | | *Pseudomonas sp.* | |
| SER3 | day 10 | day 20 | day 30 | Dish |
| | $11 \times 10^6$ | $1.2 \times 10^4$ | $5 \times 10^4$ | LB + Cm |
| Root Size (cm) | $5.8 \pm 0.2$ | $11.2 \pm 0.1$ | $14.4 \pm 0.2$ | |
| | | | *Flavobacterium denitrificans* | |
| GOR5 | day 10 | day 20 | day 30 | Dish |
| | $16 \times 10^S$ | $1.2 \times 10^b$ | $2 \times 10^b$ | LB + Rif |
| | $3.7 \times 10^b$ | $1.2 \times 10^b$ | $2 \times 10^b$ | M9 + Rif |
| Root Size (cm) | $5.4 \pm 0.1$ | $11.2 \pm 0.2$ | $13.2 \pm 0.2$ | |
| | | | *Pseudomonas brassicacearum* | |
| GO12 | day 10 | day 20 | day 30 | Dish |
| | $24 \times 10^b$ | $8 \times 10^b$ | $4.7 \times 10^4$ | LB + Cm |
| Root Size (cm) | $5.4 \pm 0.1$ | $10.1 \pm 0.1$ | $12.3 \pm 0.2$ | |
| **1XM9/Clover** | | | Without microorganisms | |
| Control | day 10 | day 20 | day 30 | Dish |
| | 0 | 0 | 0 | LB + Cm |
| Root Size (cm) | 5.6 | $9.8 \pm 0.1$ | $9.2 \pm 0.1$ | |

**Example 2**

The process of invention was applied in a test of the effect of GOR5 on the establishment of pine trees that were kept in nurseries prior to their transplant on quarry soils. For this, two blocks of 10 plants each were used. Ten plants were transplanted to pots with 1 kg of soil and were used as a control. The root balls of the other 10 plants were immersed in a solution of GOR5 and were transplanted to pots with 1 kg of the same soil. The height and diameter of the trunk of the pine trees were measured at the beginning of the test and four months after transplanted. The plants were watered every 15 days with 50 ml of water per pine tree each time. The results are shown in Table 11.

**Table 11**

| CONTROL TEST | | | | |
|---|---|---|---|---|
| PINE TREE | Start time | 4 months | Ah, cm | Ah, % |
| C1 | 14 | 28 | 14 | 100.00 |
| C2 | 20 | 25 | 5 | 25.00 |
| C3 | 13 | 29 | 16 | 123.08 |
| C4 | 11 | 17 | 6 | 54.55 |
| C5 | 14 | 26 | 12 | 85.71 |
| C6 | 17 | 23 | 6 | 35.29 |
| C7 | 17.5 | 24 | 6.5 | 37.14 |

(continued)

| CONTROL TEST | | | | |
|---|---|---|---|---|
| PINE TREE | Start time | 4 months | Ah, cm | Ah, % |
| C8 | 11 | 23 | 12 | 109.09 |
| C9 | 19 | 31 | 12 | 63.16 |
| C 10 | 17 | 37 | 20 | 117.65 |
| TEST with GOR5 | | | | |
| PINE TREE | Start time | 4 months | Ah, cm | Ah, % |
| C1 | 14 | 32 | 18 | 128.57 |
| C2 | 20 | 37 | 18 | 94.74 |
| C3 | 13 | 34 | 18 | 112.74 |
| C4 | 11 | 29 | 15 | 107.14 |
| C5 | 14 | 33 | 19 | 135.71 |
| C6 | 17 | 19 | 11 | 137.50 |
| C7 | 17.5 | 24 | 12 | 100.00 |
| C8 | 11 | 24 | 13 | 118.18 |
| C9 | 19 | 20 | 15 | 300.00 |
| C10 | 17 | 28 | 17 | 154.55 |

As can be observed in Table 11 above, the control pine trees grew an average of approximately 10.37 cm over these four months, which involves an average increase of 75%. Pine trees treated with GOR5 grew an average of approximately 15.30 cm over the same period, which involves an average increase of 131%. Analysis of the microorganisms in the soil showed that, whereas in the control soil the GOR5 strain was virtually undetectable, in the soil of the treated plants its density ranged between $5 \times 10^4$ and approximately $6 \times 10^5$.

## Claims

1. A process for the recovery of degraded soils, **characterised in that** it based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, the adhesion of these microorganisms or a consortium thereof to the roots of plants by immersing the root ball, colonisation of the rhizosphere of said plants by the microorganisms and revegetation of the soil to be treated with them.

2. A process for the recovery of degraded soils, **characterised in that** it is based on isolating acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, the adhesion of these microorganisms or a consortium thereof to the seeds of plants by immersing the seeds in an inoculation solution of such microorganisms, and after the growth of the saplings, revegetating the land to be treated with them.

3. A process for the recovery of degraded soils, **characterised in that** it is based on the isolation of acid-producing microorganisms chosen from *Pseudomonas putida* BE2, *Pseudomonas brassicacearum* strain GO12, *Flavobacterium denitrificans* strain GOR5 and *Pseudomonas* sp. strain SER3, a mixture of the microorganisms or a consortium thereof with a solid support such as sepiolite, bentonite, peat, perlite or cork chips, the adhesion and incubation of such microorganisms or a consortium thereof to the solid support and finally supplying the inoculated solid support to the land to be treated.

4. A process for the recovery of degraded soils according to claim 3, **characterised in that** the solid support is peat.

5. A process for the recovery of degraded soils according to any of the previous claims, **characterised in that** the acid-producing organism is *Flavobacterium denitrificans.*

6. A process for the recovery of degraded soils according to any of the previous claims, **characterised in that** the process is applied on soils that are degraded due to quarry activity.

7. A process for the recovery of degraded soils according to any of the previous claims, **characterised in that** the microorganisms or a consortium thereof can be formulated as a liquid or a solid for application.

**Fig. 1A**

| GLICE | NAME | RED | BLUE | NaHCO$_3$ | COLOUR | MORPH | GRAM | API NE | | 16S |
|---|---|---|---|---|---|---|---|---|---|---|
| 1 | B.E.1 | O | O | O | X | | - | ACHROMOBACTER XYLOSOXIDANS | 1040457 | |
| 2 | B.E.2 | ● | ● | O | X | | - | P. FLORESCENS 68% | 1145455 | |
| 3 | B.E.3 | O | O | ● | X | | - | PSEUDOMONAS FLUORESCENS | 1057457 | |
| 4 | B.E.4 | O | O | ● | X | | - | P.PUTIDA 94.8% | 1143457 | |
| 5 | B.E.5 | O | O | O | X | | - | BURKHOLDERIA GLADIOLI (2 POSSIBLE+) | 1565757 | |
| 6 | B.M.2 | ● | O | ● | X | | - | P. PUTIDA 99,5% | 140057 | |
| 7 | B.M.3 | O | ● | O | X | X | - | ACHROMOBACTER XYLOSOXIDANS 95.8% | 1140477 | |
| 8 | B.M.5 | ● | O | O | X | | - | ACHROMOBACTER XYLOSOXIDAMS 95.8% | 1140477 | |
| 9 | G.E.1 | O | ● | O | X | X | - | P. FLUORECENS 78% | 1057655 | |
| 10 | G.E.2 | O | O | O | | X | + | ATHROBACTER SP | | |
| 11 | G.E.3 | O | O | O | X | | - | OCHOROBACTRUM ANTHROPI 98,6% | 1043644 | |
| 12 | G.E.5 | O | O | O | | X | - | RHIZOBIUM RADIOBACTER 95,9% ? | 1467756 | |
| 13 | G.E.7 | O | O | ● | X | X | - | P.STUTREZI 99,7% | 1040655 | |
| 14 | G.E.8 | O | O | O | | X | + | ATHROBACTER SP | | |
| 15 | G.E.10 | O | O | O | | X | + | ATHROBACTER SP | | |
| 16 | G.E.11 | O | O | O | | | | P. STRITREZI 82,7% | 1041655 | |
| 17 | G.E.4 | O | ● | ● | X | | - | BURKHOLDERIA GLADIOLI (LOW IDEN.) | 1467656 | |
| 18 | G.M.7 | O | ● | O | | X | - | RIZOBIUM RADIOBACTER 76.4% | 1663704 | |
| 19 | S.E.1 | O | O | O | X | | + | ATHROBACTER OXYDANS STRAIN | | |
| 20 | S.E.2 | O | ● | O | | X | - | BURKHOLDERIA CEPACIA 98.6% | 1467757 | |
| 21 | S.E.3 | O | O | O | | X | - | SPHINGOBACTERIUM MULTIVORUM 60,9% | 473304 | |
| 22 | S.E.4 | O | O | O | | X | + | | | |
| 23 | S.E.5 | O | O | O | | X | + | BURKHOLDERIA CEPACIA 67.6% | 1177757 | |
| 24 | S.E.6 | O | ● | ● | X | X | - | P. FLUORESCENS 99.9% | | |
| 25 | S.E.9 | O | O | O | | X | + | | | |
| 26 | S.E.10 | O | O | O | | X | - | BURKHOLDERIA CEPACIA 64.9% | 1047757 | |
| 27 | S.E.15 | O | O | O | | X | - | PS.STUZEI 99,7% | 1040655 | |
| 28 | S.M.1 | O | ● | O | X | | - | AEROMONAS HYDROPHILA/CAVIAE 99.9% | 7477775 | |

**Fig. 1B**

| 29 | S.M.2 | O | ● | O | X | | | | AEROMONAS HYDROPHILA/CAVIAE 99.8% | 7477743 | |
|----|-------|---|---|---|---|---|---|---|-----------------------------------|---------|---|
| 30 | S.M.3 | O | ● | ● | X | | | | AEROMONAS HYDROPHILA/CAVIAE 99.9% | 7477754 | |
| 31 | S.M.4 | O | ● | ● | X | | - | ATHROBACTER SP | | |
| 32 | S.M.5 | O | O | O | X | | - | P.LUTEOLA 99.7% | 5567743 | |
| 33 | S.M.6 | O | O | O | | X | - | RIZOBIUM RADIOBACTER 98% | 1467344 | |
| 34 | S.M.7 | O | ● | O | X | | - | AEROMONAS HYDROPHILA/CAVIAE 99.8% | 3477754 | |
| 35 | S.M.8 | O | O | O | X | | - | PSEUDOMONAS LUTEOLA 99.7% | 5567743 | |
| 36 | S.M.9 | O | O | O | X | | - | P. LUTEOLA 99.7% | 5567743 | |
| 37 | S.M.10 | O | O | O | | X | - | P. ALCALIGENES | | |
| 38 | S.M.11 | O | ● | O | | X | - | RIZOBIUM RADIOBACTER (PERFIL INACEP) | 1677747 | |
| 39 | S.M.12 | O | ● | ● | X | | - | AEROMONAS HYDROPHILA/CAVIAE 81.7% | 556747 | |
| 40 | S.M.13 | O | ● | ● | X | | - | PS. PUTIDA 99,5% | 142457 | |
| 41 | S.M.14 | O | ● | ● | X | | - | AEROMONAS HYDROPHILA/CAVIAE(P.INAP) | 7667747 | |
| 42 | S.M.15 | O | ● | ● | X | | - | AEROMONAS HYDROPHILA/CAVIAE 81.7% | 556747 | |
| 43 | S.M.16 | O | O | O | | X | + | MICROCOCCUS LUTEUS STRAIN | | |
| 44 | S.M.17 | O | ● | O | X | | - | AEROMONAS HYDROPHILA/CAVIAE 99.8% | 7577744 | |
| 45 | GL.E.1 | O | ● | O | | X | - | PS. FLOURENCENS 99.9% | 1157555 | |
| 46 | GL.E.2 | O | O | O | | X | - | P. PUTIDA 99.7% | 142457 | |
| 47 | GL.E.3 | O | ● | O | | X | + | MICROCOCCUS SP. | | |
| 48 | GL.E.4 | O | ● | O | | X | - | PSEUDOMONAS SP. | | |
| 49 | GL.E.5 | O | ● | O | | X | + | | | |
| 50 | | O | O | O | | | | | | |
| 51 | GL.E.8 | O | ● | O | | X | + | | | |
| 52 | GL.M.1 | O | ● | O | X | | - | PS.LUTEOLA | 767657 | |
| 53 | GL.M.2 | O | ● | O | | X | - | AEROMONAS HYDROPHILA/CAVIAE | 7577754 | |
| 54 | GL.M.3 | O | ● | O | X | | - | PS. FLUORESCENS 79.1% | 1047557 | |
| 55 | 3CL.M.1 | ● | O | ● | | | | | | |
| 56 | 3CL.M.2 | ● | O | ● | | | | | | |
| 57 | 3CL.M.3 | O | O | O | | | | | | |

**Fig. 1C**

| 58 | 2CL.E.2 | ○ | ○ | ○ | | | | | | |
|---|---|---|---|---|---|---|---|---|---|---|
| 59 | 2CL.M.1 | ○ | ○ | ○ | | | - | | | |
| 60 | 2CL.M.3 | ○ | ○ | ○ | | | - | | | |
| 61 | S.0.2 | ○ | ● | ○ | X | | - | P.LUTEOLA 71.9% | 1467755 | |
| 62 | S.0.3 | ○ | ● | ○ | X | | - | P. FLOURENCENS 86.5% | 47557 | |
| 63 | S.0.5 | ○ | ● | ○ | X | | - | P. FLOURENCENS 99.7% | 47555 | |
| 64 | S.0.8 | ○ | ● | ○ | X | | - | P. FLOURENCENS 99.9% | 157555 | |
| 65 | S.0.10 | ○ | ● | ○ | X | | - | AEROMONAS HYDROPHILA/CAVIAE 90.2% | 5467755 | |
| 66 | S.0.11 | ○ | ● | ○ | X | | - | P.LUTEOLA 99.8% | 5467741 | |
| 67 | S.0.12 | ○ | ● | ○ | X | | - | P.LUTEOLA 99.5% | 5467751 | |
| 68 | S.0.14 | ○ | ● | ○ | X | | - | AEROMONAS HYDROPHILA/CAVIAE 99.2% | 5477755 | |
| 69 | S.O.15 | ○ | ● | ○ | X | | - | AEROMONAS HYDROPHILA/CAVIAE 99.2% | 5477755 | |
| 70 | G.0.1 | ○ | ● | ○ | X | X | - | P. FLUORENCENS 99.9% | 1147555 | |
| 71 | G.O.3 | ○ | ● | ○ | X | X | - | P. FLUORENCENS 99.9% | 157555 | |
| 72 | G.O.4 | ○ | ● | ● | X | X | - | P. FLUORENCENS 99.9% | 147755 | |
| 73 | G.0.6 | ○ | ● | ○ | X | X | - | P. FLUORENCENS 99.9% | 1157555 | |
| 74 | G.0.7 | ○ | ● | ○ | X | | - | P. FLUORENCENS | 147555 | |
| 75 | G.0.8 | ○ | ● | ○ | X | X | - | P. LUTEOLA 98.2% | 5467743 | |
| 76 | G.0.10 | ○ | ○ | ○ | X | | - | BURKHOLDERIA CEPACIA 91.5% | 577757 | |
| 77 | G.0.11 | ○ | ● | ○ | X | X | - | P. LUTEOLA 82.5% | 5467740 | |
| 78 | G.0.12 | ○ | ● | ○ | X | | - | P. FLUORENCENS 99.9% | 1157555 | |
| 79 | G.0.13 | ○ | ● | ○ | X | X | - | P. LUTEOLA 99.3% | 155555 | |
| 80 | B.0.2 | ○ | ○ | ○ | | X | - | PS. PUTIDA 99.9% | 1142457 | |
| 81 | B.0.4 | ○ | ○ | ○ | | X | - | P. PUTIDA 99.4% | 1424557 | |
| 82 | B.0.5 | ● | ○ | ○ | X | | - | P. PUTIDA 99.9% | 5142457 | |
| 83 | B.0.6 | ● | ● | ● | X | | - | P. PUTIDA 99.7% | 142457 | |
| 84 | GL.0.1 | ○ | ● | ○ | X | X | - | P. LUTEOLA 82.5% | 5467740 | |
| 85 | GL.0.2 | ○ | ● | ○ | X | | - | P. FLOURENCENS 99.7% | 47555 | |
| 86 | GL.0.3 | ○ | ● | ○ | X | | - | AEROMONAS HYDROPHILA/CAVIAE 81.7% | 5567747 | |

Fig. 1D

| | | | | | | | | | | |
|---|---|---|---|---|---|---|---|---|---|---|
| 87 | GL.0.5 | O | O | O | | X | + | | | |
| 88 | GL.0.7 | O | ● | O | X | | - | AEROMONAS HYDROPHILA 81.7% | 5567747 | |
| 89 | GL.0.8 | O | ● | ● | X | | - | P. FLOURENCENS 99.7% | 47555 | |
| 90 | GL.O.11 | O | ● | O | | X | + | | | |
| 91 | GL.0.15 | O | O | O | | X | - | AEROMONAS HYDROPHILA/CAVIAE 81.7% | 5567747 | |
| 92 | GL.0.10 | O | ● | O | X | | + | | | |
| 93 | S.E.R.1 | O | ● | O | | | - | P. PLECOGLOSSICIDA | | |
| 94 | S.E.R.3 | O | ● | ● | | | - | P. FLOURENCENS 99.9% | 147555 | |
| 95 | S.E.R.4 | O | ● | ● | | | - | P. FLOURENCENS 89.4% | 1047457 | |
| 96 | S.E.R.6 | O | ● | ● | | | - | OCHOROBACTRUM ANTHROPI 99.9% | 1047457 | |
| 97 | S.E.R.7 | O | ● | ● | | | - | P. FLOURENCENS 99.8% | 1147755 | |
| 98 | S.E.R.8 | O | ● | ● | | | - | AEROMONAS HYDROPHILA/CAVIAE 98.5% | 5567777 | |
| 99 | S.E.R.10 | O | O | O | | | + | MICROCOCCUS LUTEUS STRAIN | | |
| 100 | B.E.R.1 | ● | O | ● | | | - | P. PUTIDA 99.5% | 343457 | |
| 101 | B.E.R.4 | ● | O | ● | | | - | P. PUTIDA 99.4% | 140457 | |
| 102 | B.E.R.5 | ● | O | ● | | | - | P. PUTIDA 99.7% | 142457 | |
| 103 | GL.E.R.1 | O | ● | O | | | - | P. LUTEOLA 49.8% | 4467755 | |
| 104 | GL.E.R.3 | O | ● | O | | | - | PS. FLOURENCENS 99.7% | 142457 | |
| 105 | GL.E.R.4 | O | ● | O | | | - | DELFTIA ACIDOVORANS 99.4% | 1004477 | |
| 106 | G.E.R.1 | O | ● | ● | | | - | BURKHOLDERIA CEPACIA | 1767777 | |
| 107 | G.E.R.4 | O | ● | ● | | | - | PS. PUTIDA 99.6% | 140457 | |
| 108 | G.E.R.6 | O | ● | O | | | - | OCHOROBACTRUM ANTHROPI 38% | 1047675 | |
| 109 | S.0.R.1 | O | ● | ● | | | - | PS LUTEOLA / BURKHOLDERIA CEPACIA | 1767757 | |
| 110 | S.0.R.3 | O | ● | ● | | | - | BURKHOLDERIA CEPACIA | 5567777 | |
| 111 | S.0.R.4 | O | ● | ● | | | - | P. LUTEOLA | 5561743 | |
| 112 | S.0.R.5 | O | ● | ● | | | - | P.LUTEOLA | 563657 | |
| 113 | S.0.R.6 | O | ● | O | | | - | AEROMONAS HYDROPHILA/CAVIAE 87.8% | 5567757 | |
| 114 | S.0.R.7 | O | ● | O | | | - | P. FLOURENCENS | 1047457 | |
| 115 | S.0.R.9 | O | ● | O | | | - | BURKHOLDERIA CEPACIA | 1467757 | |

Fig. 1E

| 116 | B.0.R.1 | ● | ○ | ● | | | - | P. PUTIDA 99.5% | 143457 | |
|-----|---------|---|---|---|---|---|---|-----------------|--------|---|
| 117 | B.0.R.2 | ● | ○ | ● | | | - | P. PUTIDA 99.7% | 142457 | |
| 118 | B.O.R.3 | ● | ○ | ● | | | - | ACHOROMOBACTER XYLOSOXIDANS 39% | 1140577 | |
| 119 | GL.0.R.3 | ○ | ○ | ● | | | - | UNCULTURED COMAMONADACEAE | | |
| 120 | GL.0.R.4 | ○ | ● | ○ | | | - | AEROMONAS HYDROPHILA/CAVIAE 99.2% | 5477755 | |
| 121 | G.0.R.1 | ○ | ● | ● | | | | AEROMONAS HYDROPHILA/CAVIAE | 5567756 | |
| 122 | G.0.R.2 | ○ | ● | ○ | | | - | AEROMONAS HYDROPHILA/CAVIAE | 5567757 | |
| 123 | G.0.R.3 | ○ | ● | ● | | | | BURKHOLDERIA CEPACIA | 5567777 | |
| 124 | G.0.R.4 | ○ | ● | ● | | | - | AEROMONAS HYDROPHILA/CAVIAE | 1677755 | |
| 125 | G.0.R.5 | ○ | ○ | ● | | | - | FLAVOBACTERIUM DENTRITICANS | | |
| 126 | G.0.R.6 | ○ | ● | ● | | | - | P. LUTEOLA 66% | 1567757 | |

Fig 2

**Production of $^{14}CO_2$ from $H^{14}CO_3$.**

(Samples 37 and 38 correspond to the controls. Odd columns correspond to
$^{14}CO2$ trapped in KOH. Even columns correspond to
$H^{14}CO_3$ in the medium/ml)

## Fig. 3

**Growth curve for the different organisms in MM9 supplemented with micronutrients + 0.2% glycerin**

(The glycerin contained 33.4% of glycerin and 20.5% of methanol)

MM9 (0.2%Glycerin 1)

## Fig. 4

**Growth curve for the different organisms in MM9 + 0.2% glycerin**

(The glycerin contained 33.7% of glycerin and 7% of methanol)

MM9 (0.2% Glycerin 2)

## Fig. 5

**Growth curve for the different organisms in MM9 + 0.2% glycerin**

(The glycerin contained 49.5% of glycerin without methanol)

MM9 (0.2% Glycerin 4)

Legend: B.E2, S.ER3, G.O.R5, G.O.12

## Fig. 6

**Growth curve for the different organisms in MM9 + 0.2% white sugar**

MM9 (0.2% white sugar)

Legend: B.E2, S.ER3, G.O.R5, G.O.12

## Fig. 7

**Growth curve for the different organisms in MM9 + 10 mM glucose**

(turbidity was determined at 600 nm)

## Fig. 8

**Growth curve for the different organisms in MM9 + 0.5% glucose and MM9 with 0.2% glucose (mop)**

## INTERNATIONAL SEARCH REPORT

| International application No. |
| --- |
| PCT/ ES 2009/070526 |

A. CLASSIFICATION OF SUBJECT MATTER

see extra sheet

According to International Patent Classification (IPC) or to both national classification and IPC

B. FIELDS SEARCHED

Minimum documentation searched (classification system followed by classification symbols)

A01G, C12N

Documentation searched other than minimum documentation to the extent that such documents are included in the fields searched

Electronic data base consulted during the international search (name of data base and, where practicable, search terms used)

INVENES, EPODOC, WPI, TXTE, TXTF, BIOSIS, NPL, XPESP, EMBASE.

C. DOCUMENTS CONSIDERED TO BE RELEVANT

| Category* | Citation of document, with indication, where appropriate, of the relevant passages | Relevant to claim No. |
| --- | --- | --- |
| X | RINCÓN A., RUÍZ-DÍEZ B., FERNÁNDEZ-PASCUAL M., PROBANZA A., POZUELO J.M., DE FELIPE M.R. "Afforestation of degraded soils with Pinus halepensis Mill.:Effects of inoculation with selected microorganisms and soil amendement on plant growth, rhizospheric microbial activity and ectomycorrhizal formation." Applied Soil Ecology (2006) Vol. 34, pages 42-51. Pages 43-44. | 1-3 |
| A | UROZ S., CALVARUSO C., TURPAULT M., FREY-KLETT P. "Mineral weathering by bacteria: ecology, actors and mechanisms." Trends Microbiology (2009 Aug) Vol. 17, pages 378-387. Pages 379, 381 and table 1. | 1-7 |
| A | WU C. H., WOOD T. K., MULCHANDANI A., CHEN W. "Engineering plant-microbe symbiosis for rhizoremediation of heavy metals." Applied and enviromental microbiology. (2006) Vol. 72, pages 1129-1134. Abstract and pages 1129 and 1133. | 1-7 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 02 March 2010      (02.03.2010) | **(17/03/2010)** |
| Name and mailing address of the ISA/<br>O.E.P.M.<br><br>Paseo de la Castellana, 75 28071 Madrid, España.<br>Facsimile No.   34 91 3495304 | Authorized officer<br>     M. Jesús García Bueno<br><br>Telephone No. +34 91 349 70 00 |

Form PCT/ISA/210 (second sheet) (July 2009)

**INTERNATIONAL SEARCH REPORT**

International application No.

PCT/ ES 2009/070526

CLASSIFICATION OF SUBJECT MATTER

*C12N 1/20* (2006.01)
*A01G 7/00* (2006.01)
*C12R 1/20* (2006.01)
*C12R 1/38* (2006.01)
*C12R 1/40* (2006.01)

Form PCT/ISA/210 (extra sheeet) (July 2009)

**EP 2 474 608 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101322974
- KR 20080088000
- RU 2004132410

- EP 1778817 A1
- JP 1245088 A

**Non-patent literature cited in the description**

- **Revelles, O. ; Espinosa-Urgel, M. ; Molin, S. ; Ramos, J.L.** *Journal of Bacteriology,* vol. 186, 3439-3446

- **Abril et al.** *J. Bacteriol.,* 1989, vol. 171, 6782-6790